# EUROPEAN PATENT SPECIFICATION

(11) **EP 0 514 550 B1**
(45) Date of publication and mention of the grant of the patent: **17.01.1996**
(21) Application number: 91920696.1
(22) Date of filing: 29.11.1991
(51) Int. Cl.: A21D 8/02

(54) **PROCESS FOR PRODUCING BREAD DOUGH**
HERSTELLUNGSVERFAHREN FÜR BROTTEIG
PROCEDE DE PRODUCTION DE PATE A PAIN

(30) Priority: 30.11.1990 JP 334658/90
(43) Date of publication of application: 25.11.1992
(73) Proprietor: KYOWA HAKKO KOGYO CO., LTD., Chiyoda-ku, Tokyo (JP)
(72) Inventor: NASU, Hideo 4845-4, Ami, Ami-machi, Ibaraki 300-03 (JP); TEZUKA, Toshihiko 2650-62, Oaza Numata, Inashiki-gun Ibaraki 300-05 (JP); INOUE, Seijiro 4047-3, Ami, Ami-machi, Ibaraki 300-03 (JP)
(74) Representative: Harding, Charles Thomas
(86) International application number: PCT/JP91/01669
(87) International publication number: WO 92/09204

(56) References cited:
- GB-A- 342 697
- GB-A- 343 193
- JP-A-51 029 264
- JP-A-52 134 037
- JP-A-62 000 237

## Description

The present invention relates to processes for making bread and bread dough.

For producing bread dough, the straight dough method has been conventionally employed, in which flour, water, yeast, etc. are kneaded and the kneaded mixture is fermented with punching once or twice, divided and moulded, followed by proofing. As an improved method, there is known the sponge-dough method which comprises kneading a part of flour and yeast with water, fermenting the mixture to yield a sponge, adding the remaining flour, water, etc. to the sponge, and kneading the mixture again. The sponge-dough method is lengthy because the mixture requires from 4 to 5 hours of fermentation to produce the sponge. It is therefore desired to shorten the time of the sponge-dough method.

An improved sponge-dough method is known in which a large quantity of water is added to a part of flour and the mixture is stirred at high speed to form a fluid (Japanese Published Examined Patent Application No. 6244/81). However, the sponge obtained by this method is fluid and of low viscosity. For this reason, it is difficult to convey energy to the sponge so that it is impossible to efficiently carry out kneading, and an even longer period of time is required to obtain the sponge.

In another modification of the sponge-dough method, during the sponge mixing steps, a large quantity of water is added to the flour and the sponge is adjusted to pH 4.5-5.5, followed by mixing to form a fluid (Japanese Published Unexamined Patent Application No. 160540/88). This method also has a disadvantage that energy is not readily transferred to the sponge because the sponge is a fluid, and hence it is impossible to efficiently carry out kneading so that a long time is required to obtain the final dough. Further, addition of an acid to the dough in order to lower the pH causes problems in handling such as stickiness of the dough.

There is also known a method for producing bread in which amylase is added in the sponge mixing step and an organic acid or its salt is added in the dough mixing step (Japanese Published Unexamined Patent Application No. 14653/88). In this method, an organic acid or its salt is added to remove harmful effects caused by the addition of amylase. It is described in the patent application that no good effect arises adding an organic acid to the sponge (in the first step).

These improvements on the sponge-dough method are all to improve properties of dough, and these prior publications are silent about the reducing in time for preparing dough. Overall it takes about 7 hours to prepare bread dough by the sponge-dough method.

In GB-A-343193 a two step bread making process is disclosed in which a batter is first formed using approximately one-half of the total flour and three-quarters of the total water, and then beaten for several minutes at 100-160 RPM. This high speed treatment is said to produce a much tighter dough than that which is achieved by the traditional sponge and dough process. The remainder of the flour and water is added after the high speed beating step, along with a quantity of salt.

In accordance with the present invention, investigations have been made with a view to shortening the time required for the sponge fermentation step in the two step sponge-dough method. Resulting from these investigations it has been found that the fermentation time can be shortened quite considerably, and a dough which is of excellent elasticity and machinability can be obtained by the process of:
a) forming an initial mix containing from 40 to 80 parts by weight of the total flour used to form the dough, from 30 to 80 parts by weight of the water, subject to the proviso that the amount of water in the initial mix, on a weight basis, shall not exceed the amount of flour, and a sufficient amount of yeast that upon kneading of the initial mix dough breakdown of the mix, as determined by a resistograph, begins within 5 minutes;
b) kneading that initial mix to the extent necessary to achieve the commencement of dough breakdown within said 5 minutes;
c) incorporating in the initial mix an amount of acid such that, at the end of step b), the initially kneaded mix has a pH in the range 4-5;
d) adding to the initially kneaded mix, with or without an intervening rest period, the remainder of the flour, the remainder of the water and a quantity of a salt effective to increase the final pH of the dough to a value in the range 5-6; and
e) continuing the kneading process to produce the final dough.

Also in accordance with this invention, there is provided a bread-making process which comprises preparing a dough in the manner described, and using it in a baking process to produce bread.

In addition to the specific ingredients already mentioned, viz: flour, water, yeast, acid and salt, a variety of other ingredients conventionally used in the production of bread dough, e.g. reducing agents, amylase enzyme, emulsifying agents and oxidising agents may be added at any appropriate stage of the dough making process.

In this specification, the term "the dough breakdown begins within .... minutes" is used to mean the time taken for the dough breakdown to start as determined by a treatment of the kneaded mixture with a resistograph, a known and commercially available instrument for examining properties of flour and dough, immediately after the kneading.

By the method of the present invention, the time required for the kneading is longer than in the sponge-dough method, but the fermentation time of the mixture obtained in the first kneading step can be greatly shortened, e.g. from 4-5 hours down to one hour at the most.

The process of the present invention is described in further detail below:

In carrying out the present invention, flour, yeast and water are kneaded with an appropriate kneader, which may be either a vertical mixer or horizontal mixer as used conventionally in the production of dough.

Taking the total amount of flour used for preparing dough as 100 parts on a weight basis, from 40 to 80 parts by weight, preferably 50 to 70 parts by weight of the flour, are used in the first step. If the amount of flour is less than 40 parts by weight, the amount of the mixture to be kneaded is too small for the kneading facility of a mixer and it is difficult to carry out kneading, though the situation may slightly change according to the type of a mixer. If the amount of flour is larger than 80 parts by weight, the effects of the present invention decrease.

In the first step, from 30 to 80 parts by weight of the total water are added, provided that the amount of water does not exceed that of flour. If the amount of water is larger than that of flour, the mixture obtained in the first step is a fluid and the viscosity of the mixture is low. For this reason, it is difficult to transfer energy to the mixture so that kneading cannot be carried out efficiently.

Kneading is carried out to such an extent that the dough breakdown of the resulting kneaded mixture starts within 5 minutes, preferably 2 minutes, as determined by a resistograph. When the viscosity of a portion of the mixture obtained in the first step (160g) is measured with a resistograph, it is presumed that the dough breakdown in resistogram begins early as the amount of gluten formed in the first step is larger.

During this first stage an acid is added to adjust the pH of the kneaded mixture to a value in the range 4 to 5. Suitable acids for this purpose are organic acids such as acetic acid, lactic acid, citric acid, fumaric acid, malic acid, succinic acid, pyruvic acid, tartaric acid, ascorbic acid and gluconic acid, and also secondary phosphoric acid. The amount of acid added will generally be from 0.01 to 1.0 parts by weight based on the total weight of flour used in the first and second steps, though the exact amount of the acid will vary from acid to acid.

In accordance with this invention it has been found that if the pH of the initial mixture is higher than 5 the rheological properties of dough are poor; conversely if the pH is less than 4, the dough obtained at the end of the second mixing step is undesirably sticky.

When acid is added to the kneaded mixture during the first mixing step it is sometimes difficult to determine precisely the start of dough breakdown using a resistograph. In such a case, and for the purposes of the present invention, kneading will be carried out initially for the same period of time as would have been required if no acid is added.

During the first step, reducing agents, amylase, yeast food, sugar, whole egg, etc. may be added as necessary. Suitable reducing agents are cysteine hydrochloride and glutathione.

Amylase may be added in an amount of 10 to 500 SKB unit/100g of flour. Generally the amylase will be added during the first mixing step, but can be added during the second.

Kneading in the first step is generally carried out for 5 to 15 minutes, though the kneading time varies depending upon the kneader (mixer) used, kneading conditions, amounts of flour and water, etc. By adding 2 to 40 ppm of a reducing agent, the kneading time in the first step can be shortened to 3 to 8 minutes.

After the kneading the initial mixture, the remaining flour and water are added either immediately or after an intervening fermentation period, e.g. of up to about an hour. That is then followed by a second kneading step using a kneader (mixer) as in the first step.

In the second step, a salt is added to adjust the final pH of the dough to 5 to 6, preferably 5.4 to 5.7. As the salt, alkali metal salts and alkaline earth metal salts of the organic acids mentioned above, or sodium carbonate, etc. may be used.

The salt is used generally in an amount of 0.01 to 1.0 part by weight based on the total weight of flour used in the first and second steps, though the amount of the salt varies depending upon its kind.

If the final pH of the dough is lower than 5, stickiness of the dough remains; and if the final pH is higher than 6, elasticity and strength of the dough decrease.

During the second step emulsifying agents, oxidising agents, sugar, salt (sodium chloride), shortening, skimmed milk powder, etc. may be added as necessary.

Suitable emulsifying agents are glycerine fatty acid esters, sucrose fatty acid esters, sorbitan fatty acid esters, propylene glycol fatty acid esters, lecithin, calcium stearoyl lactate, sodium stearoyl lactate, etc. and may be used in an amount of 0.01 to 0.5 part by weight based on the total weight of flour.

Suitable oxidising agents are ascorbic acid, potassium bromate, potassium iodide, etc. and may be used in an amount of 2 to 10 ppm. The oxidising agent may be added in the first step but is generally added in the second step.

Kneading in the second step is generally carried out for 10 to 15 minutes, though the kneading time varies depending upon the kneader (mixer) used, kneading conditions, amounts of flour and water, etc.

Bread can be produced from the thus obtained dough through the steps of floor time, dividing, moulding, proofing and baking in a conventional manner.

The process of the invention is further illustrated by the following Examples, of which Examples 1-4 and 7-10 are comparative.

In each case the pH of dough is determined by adding 90 ml of distilled water to 10g of the dough, homogenising the mixture at 10,000 rpm for 3 minutes using a homogeniser, and then measuring the pH with a pH meter.

In the examples "low" refers to a mixing speed of 30 rpm, "medium" is 60 rpm and "high" is 90 rpm.

### Example 1 (comparative)

### Ingredients for the initial mix

| | |
|---|---|
| Flour | 50 parts by weight |
| Yeast | 3 parts by weight |
| Water | 40 parts by weight |

### Ingredients added in the second mixing (kneading) step

| | |
|---|---|
| Flour | 50 parts by weight |
| Sugar | 5 parts by weight |
| salt | 2 parts by weight |
| Shortening | 5 parts by weight |
| Skimmed milk powder | 2 parts by weight |
| Yeast food | 0.1 parts by weight |
| Water | 30 parts by weight |

The ingredients of the initial mix were kneaded at a low speed for 3 minutes and at a high speed for 12 minutes using a vertical mixer (KANTO MIXER: 10 blade). A portion of the mixture (160g) was applied to a resistograph, and it was found that dough breakdown started after 1.5 minute. Then, the additional ingredients, except shortening, were added to the mixture. After kneading at a low speed for 3 minutes and at a medium speed for 2 minutes in the same manner as described above, shortening was added to the mixture, followed by kneading at a low speed for 2 minutes, at a medium speed for 3 minutes and at a high speed for 4 minutes.

After the second step, the dough was allowed to rest for 20 minutes in a conventional manner (floor time). The dough was then divided into a round piece of 220g for pullman bread and a round piece of 450g for one-loaf bread. After intermediate proofing for 20 minutes, the dough was moulded using a moulder and fermented in a proofing box at a temperature of 38°C and humidity (RH) of 85%. Fermentation was carried out until the height of the dough reached 1.5 cm above the mould for the one-loaf bread and was carried out for 45 minutes for the pullman bread. Thereafter, the one-loaf bread and the pullman bread were baked in an oven at a temperature of 220°C for 25 minutes and for 28 minutes, respectively.

Table 1 shows the results of evaluation of the rheological properties of the dough at the rounding stage and the moulding stage and the quality of the bread prepared.

### Example 2 (comparative).

In this example, L-cysteine hydrochloride was used as a reducing agent.

### Ingredients for the initial mix

| | |
|---|---|
| Flour | 70 parts by weight |
| Yeast | 3 parts by weight |
| Water | 49 parts by weight |
| L-Cysteine hydrochloride | 15 ppm |

### Ingredients added for the Second Mixing (Kneading) Step

| | |
|---|---|
| Flour | 30 parts by weight |
| Sugar | 5 parts by weight |
| Salt | 2 parts by weight |
| Shortening | 5 parts by weight |
| Skimmed milk powder | 2 parts by weight |
| Yeast food | 0.1 parts by weight |
| Water | 21 parts by weight |

The above-mentioned initial ingredients were kneaded at a low speed for one minute and at a high speed for 5 minutes using a vertical mixer. A portion of the mixture (160g) was applied to a resistograph, and it was found that dough breakdown started after 3 minutes. The additional ingredients were added in a second mixing (kneading) as set out in Example 1.

Pullman bread and one loaf bread were then prepared from the dough.

Table 1 shows the results of evaluation of the rheological properties of the dough at the rounding stage and the moulding stage and the quality of the bread prepared.

### Example 3 (comparative)

In this example, the kneaded mixture obtained in the first step was fermented and then subjected to the second kneading step.

### Ingredients for the Initial Mix

| | |
|---|---|
| Flour | 60 parts by weight |
| Yeast | 3 parts by weight |
| Sugar | 1 parts by weight |
| Water | 36 parts by weight |

### Additional Ingredients for the Second Mixing (Kneading) Step

| | |
|---|---|
| Flour | 40 parts by weight |
| Sugar | 5 parts by weight |
| Salt | 2 parts by weight |
| Shortening | 5 parts by weight |
| Skimmed milk powder | 2 parts by weight |
| Yeast food | 0.1 parts by weight |
| Water | 34 parts by weight |

The initial ingredients were kneaded at a low speed for one minute and at a high speed for 7 minutes using a vertical mixer. A portion of the mixture (160g) was applied to a resistograph, and it was found that dough breakdown started after 2.5 minutes. After the kneaded mixture had been left in a fermentation room at 28°C for 30 minutes, the additional ingredients were added and kneaded in by the same procedure as set out in Example 1.

The dough was then baked to provide one-loaf bread and pullman bread.

Table 1 shows the results of evaluation of the rheological properties of the dough at the rounding stage and the moulding stage and the quality of the bread prepared.

### Example 4 (Comparative)

In this example, sweet bread was prepared.

### Ingredients for the Initial Mix

| | |
|---|---|
| Flour | 60 parts by weight |
| Yeast | 3/5 parts by weight |
| Sugar | 4 parts by weight |
| Whole egg | 4 parts by weight |
| Water | 35 parts by weight |

### Additional Ingredients for the Second Mixing (Kneading) Step

| | |
|---|---|
| Flour | 40 parts by weight |
| Sugar | 20 parts by weight |
| Salt | 1 parts by weight |
| Shortening | 8 parts by weight |
| Skimmed milk powder | 2 parts by weight |
| Yeast food | 0.1 parts by weight |
| Water | 20 parts by weight |

The initial ingredients were kneaded at a low speed for 3 minutes and at a high speed for 12 minutes using a vertical mixer. A portion of the mixture (160g) was applied to a resistograph, and it was found that dough breakdown started after 0.5 minute. The additional ingredients, except shortening, were then added to the mixture and kneaded at a low speed for 3 minutes and at a medium speed for 2 minutes. The shortening was then added to the mixture, followed by kneading at a low speed for 2 minutes, at a medium speed for 3 minutes and at a high speed for 2 minutes.

The dough was then allowed to rest for 20 minutes in a conventional manner (floor time), and then divided into rounded pieces each of 60g. After intermediate proofing for 20 minutes, the dough was moulded using a moulder. The moulded pieces of dough were fermented in a proofing box at a temperature of 38°C and humidity (RH) of 85% for 45 minutes, followed by baking in an oven at a temperature of 200°C for 12 minutes to prepare sweet roll bread.

Table 1 shows the result of evaluation of the rheological properties of the dough at the rounding stage and the moulding stage and the quality of the bread prepared.

### Example 5 (Invention)

In this example, the pH was adjusted by adding an acid in the first step and adding a pH increasing salt in the second step.

### Ingredients for Initial Mix

| | |
|---|---|
| Flour | 60 parts by weight |
| Yeast | 3 parts by weight |
| Citric Acid | 0.12 parts by weight |
| Water | 42 parts by weight |

### Additional Ingredients for the Second Mixing (Kneading) Step

| | |
|---|---|
| Flour | 40 parts by weight |
| Sugar | 5 parts by weight |
| Salt | 2 parts by weight |
| Shortening | 5 parts by weight |
| Skimmed milk powder | 2 parts by weight |
| Yeast food | 0.1 parts by weight |
| Sodium carbonate | 0.06 parts by weight |
| Water | 26 parts by weight |

The initial ingredients were kneaded at a low speed for one minute and at a high speed for 7 minutes using a vertical mixer. A portion of the mixture (160g) was applied to a resistograph, and it was found that dough breakdown started immediately. The pH of the kneaded mixture was 4.2. The additional ingredients, except the shortening, were then added and the mixture kneaded at a low speed for 3 minutes and at a medium speed for 2 minutes. The shortening was then added, followed by kneading at a low speed for 2 minutes, at a medium speed for 3 minutes and at a high speed for 2 minutes. The final pH of the dough was 5.6.

The dough was then allowed to rest for 20 minutes in a conventional manner (floor time), and then divided into one round piece of 220g for pullman bread, and one round piece of 450g for one-loaf bread. After intermediate proofing for 20 minutes, the dough was moulded using a moulder and fermented in a proofing box at a temperature of 38°C and humidity (RH) of 85%. Fermentation was carried out until the height of the dough reached 1.5 cm above the mould for the one-loaf bread and for 45 minutes for the pullman bread. The one-loaf bread and the pullman bread were then baked in an oven at a temperature of 220°C for 25 minutes and for 28 minutes, respectively.

Table 1 shows the results of evaluation of the rheological properties of the dough at the rounding stage and the moulding stage and the quality of the bread prepared.

In this example, the pH was adjusted by adding an acid in the first step and adding a salt in the second step and a glycerine fatty acid ester, potassium bromate and amylase were added in the second step.

### Example 6 (Invention)

### Ingredients for the Initial Mix

| | |
|---|---|
| Flour | 50 parts by weight |
| Yeast | 3 parts by weight |
| 10% Acetic Acid | 1.5 parts by weight |
| Water | 40 parts by weight |

### Additional Ingredients for the Second Mixing (Kneading) Step

| | |
|---|---|
| Flour | 50 parts by weight |
| Sugar | 5 parts by weight |
| Salt | 2 parts by weight |
| Shortening | 5 parts by weight |
| Skimmed milk powder | 2 parts by weight |
| Sodium carbonate | 0.04 parts by weight |
| Glycerine fatty acid ester | 0.3 parts by weight |
| Potassium bromate | 10 ppm |
| Amylase | 90 SKB unit/100g flour |
| Water | 30 parts by weight |

The initial ingredients were kneaded at a low speed for one minute and at a high speed for 7 minutes using a vertical mixer. A portion of the mixture (160g) was applied to a resistograph, and it was found that dough breakdown started immediately. The pH of the initially kneaded mixture was 4.6. The additional ingredients, except the shortening, were then added, and the mixture kneaded at a low speed for 3 minutes and at a medium speed for 2 minutes. The shortening was then added and the mixture further kneaded at a low speed for 2 minutes, at a medium speed for 3 minutes and at a high speed for 2 minutes. The final pH of the dough was 5.5. The dough was then used to prepare one-loaf bread and pullman bread in the manner described in Example 5.

Table 1 shows the results of evaluation of the rheological properties of the dough at the rounding stage and the moulding stage and the quality of the bread prepared.

### Example 7 (Comparative)

In this example, the kneading time in the first step was shortened.

The same initial ingredients as used in Example 1 were kneaded at a low speed for 3 minutes and at a high speed for 2 minutes using a vertical mixer. A portion of the mixture (160g) was applied to a resistograph, and it was found that dough breakdown started more than 20 minutes later. Then, the same procedure for the second and subsequent steps as in Example 1 was repeated to obtain one-loaf bread and pullman bread.

Table 1 shows the results of evaluation of the rheological properties of the dough at the rounding stage and the moulding stage and the quality of the bread prepared.

### Example 8 (Comparative)

In this example, the proportion of flour to water in the first step is changed to obtain the kneaded mixture as a fluid.

### Ingredients for the Initial Mix

| | |
|---|---|
| Flour | 30 parts by weight |
| Yeast | 3 parts by weight |
| Water | 70 parts by weight |

### Additional Ingredients in the Second Mixing (Kneading) Step

| | |
|---|---|
| Flour | 70 parts by weight |
| Sugar | 5 parts by weight |
| Salt | 2 parts by weight |
| Shortening | 5 parts by weight |
| Skimmed milk powder | 2 parts by weight |
| Yeast food | 0.1 parts by weight |

The initial ingredients were kneaded in the same manner as in Example 1 using a vertical mixer. The kneaded mixture was a fluid and no gluten was formed. It was impossible to measure the time taken for dough breakdown to start with a resistograph. The additional ingredients, except the shortening, were then added, and the mixture kneaded at a low speed for 3 minutes and at a medium speed for 2 minutes. The shortening was then added and the mixture kneaded at a low speed for 2 minutes, at a medium speed for 3 minutes and at a high speed for 6 minutes. The dough was then used to prepare one-loaf bread and pullman bread as described in Example 1.

Table 1 shows the results of evaluation of the rheological properties of the dough at the rounding stage and the moulding stage and the quality of the bread prepared.

### Example 9 (Comparative)

In this example, the pH of the kneaded mixture was lowered to 4.2 in the first step but the pH was not adjusted in the second step.

One-loaf bread and pullman bread were prepared from the same ingredients by the same procedure as in Example 5, except that sodium carbonate was excluded in the second step.

Table 1 shows the results of evaluation of the rheological properties of the dough at the rounding stage and the moulding stage and the quality of the bread prepared.

### Example 10 (Reference)

An example of a conventional sponge-dough method is given for reference purposes.

### Ingredients for the Initial Mix

| | |
|---|---|
| Flour | 70 parts by weight |
| Yeast | 2 parts by weight |
| Yeast food | 0.1 parts by weight |
| Water | 42 parts by weight |

### Additional Ingredients for the Second Mixing (Kneading) Step

| | |
|---|---|
| Flour | 30 parts by weight |
| Sugar | 5 parts by weight |
| Salt | 2 parts by weight |
| Shortening | 5 parts by weight |
| Skimmed milk powder | 2 parts by weight |
| Water | 26 parts by weight |

The initial ingredients were kneaded at a low speed for 3 minutes and at a high speed for one minute using a vertical mixer, followed by fermentation in a fermentation room at 28°C for 4 hours. The pH of the kneaded mixture before fermentation was 5.7 and afterwards was 5.0. Before the fermentation step, it was found by using a resistograph that dough breakdown of the kneaded mixture obtained in the first step started after 7 minutes.

The additional ingredients, except the shortening, were then added and the mixture kneaded at a low speed for 3 minutes and at a medium speed for 2 minutes.

The shortening was then added and the mixture further kneaded at a low speed for 2 minutes, at a medium speed for 3 minutes and at a high speed for 3 minutes. The final pH of the dough was 5.4. The dough was then used to prepare one-loaf bread and pullman bread as described in Example 5.

Table 1 shows the results of evaluation of the rheological properties of the dough at the rounding stage and the moulding stage and the quality of the bread prepared.

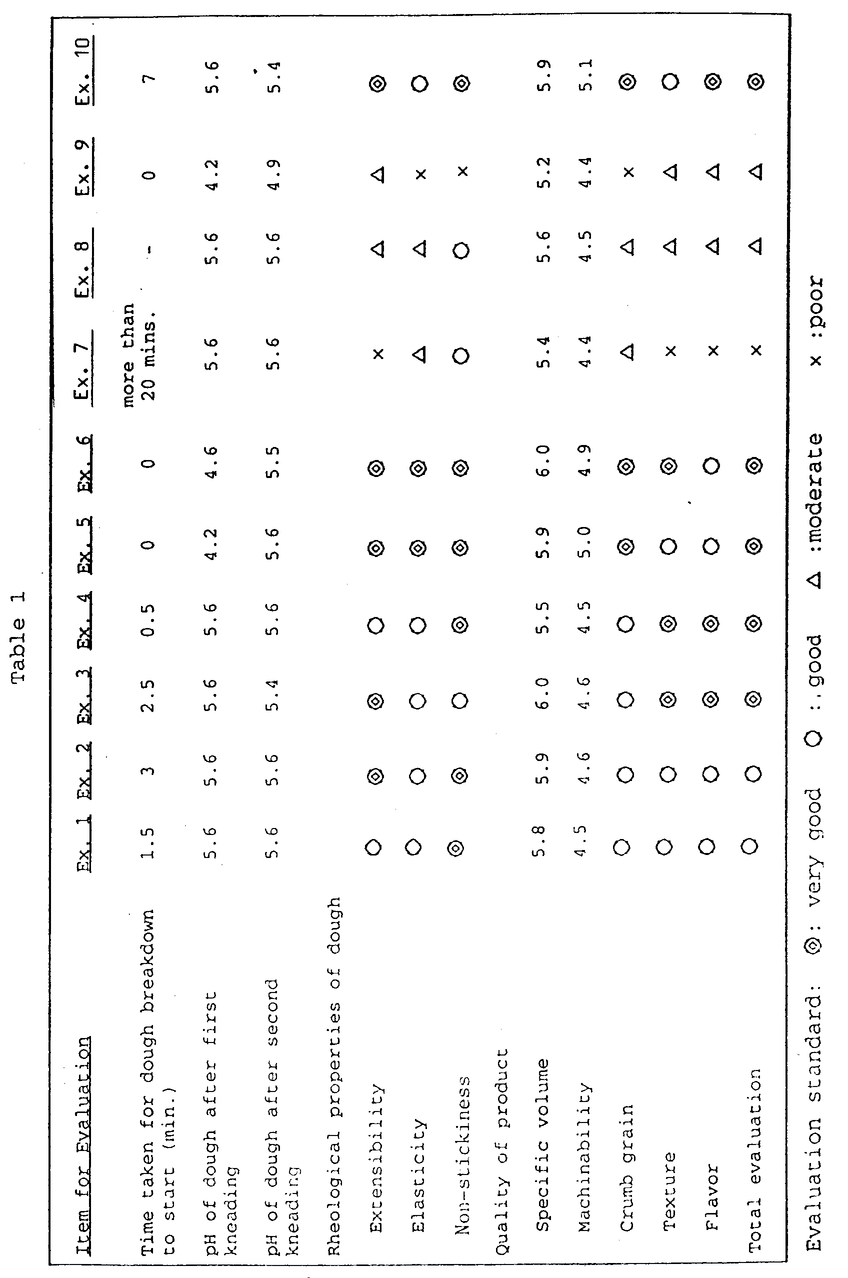

## Claims

1. A process for producing a bread dough which comprises
a) forming an initial mix containing from 40 to 80 parts by weight of the total flour used to form the dough, from 30 to 80 parts by weight of the water, subject to the proviso that the amount of water in the initial mix, on a weight basis, shall not exceed the amount of flour, and a sufficient amount of yeast that upon kneading of the initial mix dough breakdown of the mix, as determined by a resistograph, begins within 5 minutes;
b) kneading that initial mix to the extent necessary to achieve the commencement of dough breakdown within said 5 minutes;
c) incorporating in the initial mix an amount of acid such that, at the end of step b), the initially kneaded mix has a pH in the range 4-5;
d) adding to the initially kneaded mix, with or without an intervening rest period, the remainder of the flour, the remainder of the water and a quantity of a salt effective to increase the final pH of the dough to a value in the range 5-6; and
e) continuing the kneading process to produce the final dough.

2. A process according to claim 1, wherein the pH adjusting salt added in step d) is sodium carbonate, or an alkali or alkaline earth metal salt of acetic, lactic, citric, fumaric, tartaric, malic, succinic, pyruvic, ascorbic or gluconic acid.

3. A process according to claim 1 or 2, wherein the amount of pH adjusting salt added in step d) is effective to provide the dough with a final pH in the range 5.4 to 5.7.

4. A process according to any one of claims 1-3, wherein the pH adjusting acid incorporated in the initial mix is secondary phosphoric acid or an organic acid selected from acetic, lactic, citric, fumaric, tartaric, malic, succinic, pyruvic, ascorbic and gluconic acid.

5. A process according to any one of claims 1-4, wherein there is added to the dough during either of the mixing steps a) and d) sugar, an amylase and/or an oxidising agent.

6. A process according to claim 5, wherein the amylase is added during the first mixing step.

7. A process according to claim 5, wherein the oxidising agent is added during the second mixing step.

8. A process according to any one of claims 1-7, wherein there is added, or additionally added, to the initial mix one or more of the following: a reducing agent, yeast food, sugar or whole egg.

9. A process according to any one of claims 1-8, wherein there is added, or additionally added to the dough during the second mixing step d) one or more of the following: an emulsifying agent, sugar, salt, shortening or skimmed milk powder.

10. A process according to any one of claims 1-9, wherein, in step b), the initial mix is kneaded for a period of from 5 to 15 minutes.

11. A process according to claim 8 wherein the initial mix contains from 2 to 40 ppm of a reducing agent and in step b) the initial mix is kneaded for a period of 3 to 8 minutes.

12. A process according to any one of claim 1 to 11 wherein, in step e), the complete dough mix is kneaded for a period of from 10 to 15 minutes.

13. A bread-making process which comprises obtaining a bread dough by a process as claimed in any one of claims 1-12 and baking it into bread.

## Patentansprüche

1. Verfahren zur Herstellung eines Brotteigs, umfassend:
a) Erzeugen eines anfänglichen Gemisches, das 40 bis 80 Gew.-Teile des gesamten zur Bildung des Teigs verwendeten Mehls, 30 bis 80 Gew.-Teile des Wassers, mit der Maßgabe, daß die Wassermenge des anfänglichen Gemisches auf Gewichtsbasis nicht die Menge des Mehls übersteigen sollte, und eine ausreichende Menge Hefe enthält, daß durch Kneten des anfänglichen Gemisches ein Teigzusammenfallen bei dem Gemisch, bestimmt mit einem Widerstandsaufzeichner, innerhalb 5 Minuten beginnt,
b) Kneten des anfänglichen Gemisches in dem erforderlichen Ausmaß, um den Beginn des Teigzusammerfallens innerhalb der 5 Minuten zu erreichen,
c) Einmischen einer solchen Menge an Säure in das anfängliche Gemisch, daß am Ende von Schritt b) das anfänglich geknetete Gemisch einen pH-Wert im Bereich von 4 - 5 aufweist,
d) Zugabe des Rests des Mehls, des Rests des Wassers und einer wirksamen Salzmenge, um eine Erhöhung des pH-Endwerts des Teigs auf einen Wert im Bereich von 5 - 6 zu bewirken, zum anfänglich gekneteten Gemisch, mit oder ohne dazwischenliegendem Ruhezeitraum, und
e) Fortsetzen des Knetverfahrens, um den endgültigen Teig herzustellen.

2. Verfahren nach Anspruch 1, wobei das in Schritt d) zugegebene, den pH-Wert einstellende Salz Natriumcarbonat oder ein Alkali- oder Erdalkalimetallsalz von Essig-, Milch-, Zitronen-, Fumar-, Wein-, Äpfel-, Bernstein-, Brenztrauben-, Ascorbin- oder Gluconsäure ist.

3. Verfahren nach Anspruch 1 oder 2, wobei die Menge des in Schritt d) zugebenen, den pH-Wert einstellenden Salzes wirksam ist, um einen Teig mit einem pH-Endwert im Bereich von 5.4 bis 5.7 bereitzustellen.

4. Verfahren nach einem der Ansprüche 1 - 3, wobei die in das anfängliche Gemisch eingemischte, den pH-Wert einstellende Säure eine sekundäre Phosphorsäure oder eine organische Säure, ausgewählt aus Essig-, Milch-, Zitronen-, Fumar-, Wein-, Äpfel-, Bernstein-, Brenztrauben-, Ascorbin- und Gluconsäure ist.

5. Verfahren nach einem der Ansprüche 1 - 4, wobei zum Teig während eines der Mischschritte a) und d) Zucker, eine Amylase und/oder ein Oxidationsmittel gegeben wird.

6. Verfahren nach Anspruch 5, wobei die Amylase während des ersten Mischschritts zugegeben wird.

7. Verfahren nach Anspruch 5, wobei das Oxidationsmittel während des zweiten Mischschritts zugegeben wird.

8. Verfahren nach einem der Ansprüche 1 - 7, wobei zum anfänglichen Gemisch einer oder mehrere der folgenden Bestandteile zugegeben oder zusätzlich zugegeben wird: ein Reduktionsmittel, Hefenahrung, Zucker oder Vollei.

9. Verfahren nach einem der Ansprüche 1 - 8, wobei während des zweiten Mischschritts d) einer oder mehrere der folgenden Bestandteile zugegeben oder zusätzlich zum Teig gegeben wird: ein Emulgator, Zucker, Salz, Backfett oder Magermilchpulver.

10. Verfahren nach einem der Ansprüche 1 - 9, wobei im Schritt b) das anfängliche Gemisch für einen Zeitraum von 5 bis 15 Minuten geknetet wird.

11. Verfahren nach Anspruch 8, wobei das anfängliche Gemisch 2 bis 40 ppm eines Reduktionsmittels enthält und im Schritt b) das anfängliche Gemisch für einen Zeitraum von 3 bis 8 Minuten geknetet wird.

12. Verfahren nach einem der Ansprüche 1 bis 11, wobei im Schritt e) das vollständige Teiggemisch für einen Zeitraum von 10 bis 15 Minuten geknetet wird.

13. Brotherstellungsverfahren, umfassend den Erhalt eines Brotteigs mit einem Verfahren nach einem der Ansprüche 1 - 12 und Backen zu einem Brot.

## Revendications

1. Procédé de production d'une pâte à pain, qui comprend les étapes consistant à :
a) former un mélange initial contenant de 40 à 80 parties en poids de la quantité totale de farine utilisée pour former la pâte, de 30 à 80 parties en poids de l'eau, sous réserve que la quantité d'eau présente dans le mélange initial, exprimée en poids, ne dépasse pas la quantité de farine, et une quantité de levure suffisante pour qu'à la suite du pétrissage du mélange initial, l'amollissement de la pâte que constitue ce mélange, déterminé à l'aide d'un résistographe, commence dans les 5 minutes ;
b) pétrir ce mélange initial au degré nécessaire pour que la pâte commence effectivement à s'amollir dans lesdites 5 minutes ;
c) incorporer dans le mélange initial une quantité d'acide telle que, à la fin de l'étape b), le mélange ayant subi le pétrissage initial ait un pH situé dans l'intervalle allant de 4 à 5 ;
d) ajouter au mélange ayant subi le pétrissage initial, sans le laisser reposer ou en lui laissant une période intermédiaire de repos, le reste de la farine, le reste de l'eau et une certaine quantité d'un sel permettant d'augmenter le pH final de la pâte jusqu'à une valeur située dans l'intervalle allant de 5 à 6 ;
e) poursuivre l'opération de pétrissage afin de produire la pâte finale.

2. Procédé conforme à la revendication 1, dans lequel le sel ajouté au cours de l'étape d) pour ajuster le pH est du carbonate de sodium, ou un sel de métal alcalin ou alcalino-terreux et d'acide acétique, lactique, citrique, fumarique, tartrique, malique, succinique, pyruvique, ascorbique ou gluconique.

3. Procédé conforme à la revendication 1 ou 2, dans lequel la quantité de sel ajoutée au cours de l'étape d) pour ajuster le pH permet effectivement de conférer à la pâte un pH final situé dans l'intervalle allant de 5,4 à 5,7.

4. Procédé conforme à l'une des revendications 1 à 3, dans lequel l'acide incorporé dans le mélange initial pour en ajuster le pH est de l'acide phosphorique secondaire ou un acide organique choisi parmi les acides acétique, lactique, citrique, fumarique, tartrique, malique, succinique, pyruvique, ascorbique et gluconique.

5. Procédé conforme à l'une des revendications 1 à 4, dans lequel on ajoute à la pâte, au cours de l'une ou l'autre des étapes de mélange a) et d), du sucre, une amylase et/ou un agent oxydant.

6. Procédé conforme à la revendication 5, dans lequel on ajoute l'amylase au cours de la première étape de mélange.

7. Procédé conforme à la revendication 5, dans lequel on ajoute l'agent oxydant au cours de la seconde étape de mélange.

8. Procédé conforme à l'une des revendications 1 à 7, dans lequel on ajoute, ou l'on ajoute en plus, au mélange initial, un ou plusieurs des ingrédients suivants : un agent réducteur, un aliment pour levure, du sucre ou de l'oeuf entier.

9. Procédé conforme à l'une des revendications 1 à 8, dans lequel on ajoute, ou l'on ajoute en plus, à la pâte, au cours de la seconde étape de mélange d), un ou plusieurs des ingrédients suivants : un agent émulsifiant, du sucre, un sel, des matières grasses ou de la poudre de lait écrémé.

10. Procédé conforme à l'une des revendications 1 à 9, dans lequel, dans l'étape b), on pétrit le mélange initial pendant un laps de temps de 5 à 15 minutes.

11. Procédé conforme à la revendication 8, dans lequel le mélange initial contient de 2 à 40 ppm d'un agent réducteur, et au cours de l'étape b), on pétrit le mélange initial pendant un laps de temps de 3 à 8 minutes.

12. Procédé conforme à l'une des revendications 1 à 11, dans lequel, dans l'étape e), on pétrit le mélange complet constituant la pâte pendant un laps de temps de 10 à 15 minutes.

13. Procédé de fabrication de pain, qui comporte le fait d'obtenir une pâte à pain selon un procédé conforme à l'une des revendications 1 à 12, et le fait de transformer cette pâte en pain par cuisson.
